# EUROPÄISCHE PATENTSCHRIFT

(11) **EP 4 474 667 B1**
(45) Veröffentlichungstag und Bekanntmachung des Hinweises auf die Patenterteilung: **04.02.2026**
(21) Anmeldenummer: 23177444.9
(22) Anmeldetag: 06.06.2023
(51) Int. Cl.: F16D 1/108, H02K 7/116, F16D 7/00, F16H 55/14, F16D 7/10

(54) **VERSTELLANTRIEB MIT EINER SICHERHEITSKUPPLUNG**
ADJUSTMENT DRIVE WITH OVERLOAD CLUTCH
ENTRAÎNEMENT DE RÉGLAGE AVEC EMBRAYAGE DE SÉCURITÉ

(43) Veröffentlichungstag der Anmeldung: 11.12.2024
(73) Patentinhaber: Magna Auteca GmbH, 8160 Krottendorf bei Weiz (AT)
(72) Erfinder: SCHADLER, Bernhard Hubert, 8211 Gersdorf an der Feistritz (AT)
(74) Vertreter: Zangger, Bernd

(56) Entgegenhaltungen:
- EP-A1- 3 483 477
- EP-A1- 3 567 277
- US-A1- 2014 157 926

## Beschreibung

### Gebiet der Erfindung

Die vorliegende Erfindung betrifft einen Verstellantrieb, umfassend einen Elektromotor und ein Getriebe mit einer selbsthemmenden Getriebestufe, insbesondere einen Verstellantrieb in einem Kraftfahrzeug.

### Stand der Technik

Es ist bekannt, dass in Kraftfahrzeugen Verstellantriebe verwendet werden, um beispielsweise Klappen oder Türen mit Hilfe eines elektrischen Antriebs zu betätigen. Solche Verstellantriebe verwenden meist möglichst kleine Elektromotoren und oft mehrstufige Getriebe zur Übersetzung des Drehmoments. Oft verwenden derartige mehrstufige Getriebe von Verstellantrieben eine selbsthemmende Getriebestufe und bilden somit selbsthemmende Getriebe.

Um ein selbsthemmendes Getriebe vor Beschädigungen zu schützen ist es oftmals notwendig eine Sicherheitskupplung zu verbauen die im Falle eines zu großen äußeren Moments die selbsthemmende Getriebestufe vom extern eingebrachten Moment trennt. Speziell bei elektrischen Klappen, Griffen und Türen ist oftmals auch eine manuelle Betätigung (tip to run) vorgesehen, die in weiterer Folge den elektrischen Mechanismus (Getriebe) aktiviert. In der Regel wird die manuelle Bewegung durch ein teilweises auskuppeln der Kupplung in Kombination mit einer Winkelmessung erfasst und als Bewegungsanforderung and den Motor verarbeitet.

Die Haptik einer manuell induzierten Bewegung (tip to run) ist vom Kupplungsmoment abhängig, und es ist schwer einen Konsens zwischen Haptik und Sicherheitskupplung für den Schutz des Getriebes zu erreichen. Zudem ist beim Einsatz eines Standardgetriebes in verschiedenen Endanwendungen immer wieder das sicherheitsrelevante Bauteil neu auf die Anwendung abzustimmen, um den haptischen Anforderungen gerecht zu werden.

Aus der EP 3 483 477 A1 ist eine Antriebsanordnung, zur Verstellung einer Aerodynamikklappe an einem Fahrzeug, bekannt, umfassend einen Elektromotor, ein mehrstufiges Getriebe, eine Abtriebswelle und mindestens zwei Gehäusehälften, wobei das Getriebe Stirnräder umfasst und mindestens eine selbsthemmende Getriebestufe umfasst, wobei die selbsthemmende Getriebestufe weder die erste noch die letzte Getriebestufe des Getriebes bildet.

### Zusammenfassung der Erfindung

Es ist eine Aufgabe der Erfindung, einen Verstellantrieb der genannten Art in dieser Hinsicht zu verbessern und insbesondere einen Verstellantrieb, umfassend einen Elektromotor und ein Getriebe mit einer selbsthemmenden Getriebestufe anzugeben, der eine Sicherheitskupplung und eine gewünschte Haptik bei einer manuellen Betätigung (tip to run) ermöglicht und flexibel für verschiedene Anforderungen anpassbar ist.

Die Lösung der Aufgabe erfolgt durch einen Verstellantrieb mit den Merkmalen gemäß Anspruch 1.

Der Verstellantrieb umfasst einen Elektromotor und ein Getriebe mit einer selbsthemmenden Getriebestufe und mit einem Abtrieb, wobei das Getriebe eine Sicherheitskupplung umfasst, die dazu eingerichtet ist, die selbsthemmende Getriebestufe im Fall eines zu großen äußeren, also über den Abtrieb eingebrachten, Moments vom äußeren Moment zu trennen, wobei die Sicherheitskupplung einen Freigang aufweist, wobei zumindest ein komprimierbares und/oder elastisches und/oder federndes Dämpfungselement im Freigang angeordnet ist, so dass die Haptik einer äußeren, also über den Abtrieb eingebrachten, Bewegungsanforderung durch das Dämpfungselement mitbestimmt ist.

Erfindungsgemäß verfügt der Verstellantrieb über eine Sicherheitskupplung, die eine selbsthemmende Getriebestufe des Getriebes des Verstellantriebes, bei einem zu großen äußeren Moment von diesem äußeren Moment trennen kann, also im Fall eines großen aufgebrachten Moments öffnet. Die Sicherheitskupplung kann zwischen zwei Zahnrädern des Getriebes des Verstellantriebes eingerichtet sein, insbesondere zwischen zwei koaxialen Zahnrädern.

Der Verstellantrieb verfügt außerdem über einen Freigang, um eine Bewegungsanforderung von außen aufzunehmen. Die Bewegungsanforderung kann detektiert werden und daraufhin der Elektromotor und somit der Verstellantrieb aktiviert werden. Eine derartige Funktionalität wird auch als "tip to run" Mechanismus bezeichnet.

Erfindungsgemäß ist ein Dämpfungselement vorzusehen, das die freie Bewegung im Freigang zumindest abschnittsweise dämpft. Das Dämpfungselement ist ein separates Bauteil. Durch Verwendung eines oder mehrerer derartiger separater Dämpfungselemente, kann gezielt die Haptik einer Bewegungsanforderung verändert und somit eingestellt werden.

Durch den Einsatz einer Kupplung mit einem in die Kupplung integrierten gedämpften Freigang ist es daher möglich, die Haptik der induzierten Bewegung unabhängig zur Auskuppelfunktion der Sicherheitskupplung auf einen jeweiligen Mechanismus einzustellen.

Durch den Einsatz eines separaten Dämpfungselements in der Sicherheitskupplung ist es möglich verschiedene haptische Variationen ohne großen Kosteneinsatz zu realisieren, da die sicherheitsrelevante Funktion der Kupplung von den haptischen Einstellungen nicht betroffen ist.

Erfindungsgemäß umfasst die Sicherheitskupplung ein motorseitiges Zahnrad und ein abtriebsseitiges Zahnrad, sowie ein Verbindungselement zur Verbindung des motorseitigen Zahnrads mit dem abtriebsseitigen Zahnrad, wobei das Verbindungselement im geschlossenen Zustand der Sicherheitskupplung eine Formschlussverbindung zu einem der beiden Zahnräder, motorseitiges Zahnrad oder abtriebsseitiges Zahnrad, aufweist und wobei das Verbindungselement den Freigang und das Dämpfungselement zu dem anderen der beiden Zahnräder, abtriebsseitiges Zahnrad oder motorseitiges Zahnrad, aufweist. Sowohl die Sicherheitskupplung als auch der Freigang mit Dämpfung sind somit so ausgebildet, dass sie jeweils zwischen dem Verbindungselement und einem der Zahnräder wirken.

Weiterbildungen der Erfindung sind in den abhängigen Ansprüchen, der Beschreibung sowie den beigefügten Zeichnungen angegeben.

Vorzugsweise umfasst der Verstellantrieb einen Winkelmesssensor und eine Steuerungseinheit, wobei die Steuerungseinheit und der Winkelmesssensor dazu eingerichtet sind, dass der Winkelmesssensor die äußere Bewegungsanforderung erfasst und daraufhin die Steuerungseinheit den Elektromotor aktiviert.

Vorzugsweise sind das motorseitige Zahnrad und das abtriebsseitige Zahnrad, zumindest axial abschnittsweise, als Hohlräder ausgeführt. Das Verbindungselement ist dann bevorzugt radial innerhalb des motorseitigen Zahnrads und des abtriebsseitigen Zahnrads angeordnet.

Bevorzugt wird der Freigang dadurch gebildet, dass das Verbindungselement radial außen liegende Erhebungen aufweist, die in entsprechenden Ausnehmungen des motorseitigen Zahnrads oder des abtriebsseitigen Zahnrads liegen, wobei die Ausnehmungen breiter ausgebildet sind als die Erhebungen, und/oder umgekehrt, so dass das Verbindungselement radial außen liegende Ausnehmungen aufweist, die um entsprechenden Erhebungen des motorseitigen Zahnrads oder des abtriebsseitigen Zahnrads liegen, wobei die Ausnehmungen breiter ausgebildet sind als die Erhebungen. Das Verbindungselement kann somit beispielsweise sternförmig oder sonnenförmig ausgebildet sein. Das Verbindungselement kann so im Inneren eines der beiden Zahnräder angeordnet sein, dass ein begrenztes Verdrehspiel gegeben ist.

Bevorzugt ist das zumindest eine komprimierbare und/oder elastische und/oder federnde Dämpfungselement im Zwischenraum zwischen einer Erhebung und einer Ausnehmung angeordnet. Besonders bevorzugt sind mehrere komprimierbare und/oder elastische und/oder federnde Dämpfungselemente jeweils in den Zwischenräumen zwischen einer Erhebung und einer Ausnehmung angeordnet. Vorzugsweise weisen das oder die Dämpfungselemente eine u-form auf und liegen das oder die Dämpfungselemente u-förmig um die Erhebungen und/oder in den Ausnehmungen.

Vorzugsweise verwendet die Sicherheitskupplung Kupplungselemente, insbesondere Kugeln, für eine formschlüssige Verbindung zwischen motorseitigem Zahnrad und abtriebsseitigem Zahnrad, wobei die Kupplungselemente im Fall eines zu großen äußeren, also über den Abtrieb eingebrachten, Moments, durch das zu große äußere Moment aus der formschlüssigen Verbindung gedrückt werden, sodass die selbsthemmende Getriebestufe vom äußeren Moment getrennt wird. Die formschlüssige Verbindung zwischen motorseitigem Zahnrad und abtriebsseitigem Zahnrad muss dabei nicht unmittelbar zwischen den beiden Zahnrädern eingerichtet sein, sondern kann auch über ein dazwischenliegendes Verbindungselement vermittelt sein.

Die Kupplungselemente, insbesondere Kugeln, können mittels Federelementen in die formschlüssige Verbindung hinein, also in Richtung schließen der Kupplung, vorgespannt sein.

Vorzugsweise sind die Kupplungselemente, insbesondere Kugeln, im Wesentlichen im Verbindungselement angeordnet. Vom Verbindungselement aus können die Kupplungselemente, im Zustand der geschlossenen Kupplung, in Ausnehmungen eines umgebenden Zahnrads gelagert sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Verstellantriebes.
- Fig. 2: ist eine seitliche Schnittansicht eines Teiles des Getriebes eines erfindungsgemäßen Verstellantriebes gemäß Fig. 1.
- Fig. 3: ist eine Schnittansicht gemäß Schnitt B-B der Fig. 2.
- Fig. 4: ist eine Schnittansicht gemäß Schnitt C-C der Fig. 2.

### Detaillierte Beschreibung der Erfindung

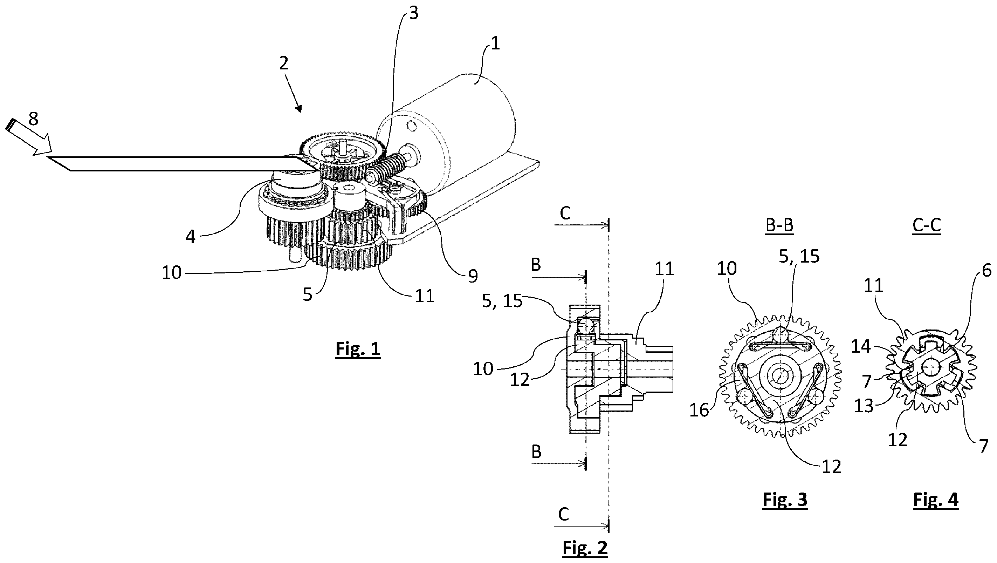

In Fig. 1 ist ein erfindungsgemäßer Verstellantrieb dargestellt, zusammen mit einer von außen, beispielsweise über einen Griff, auf den Abtrieb 4 des Verstellantriebes aufbringbaren Bewegungsanforderung 8, also eines äußeren Moments.

Der Verstellantrieb umfasst einen Elektromotor 1 und ein Getriebe 2. Das Getriebe 2 umfasst wiederum eine selbsthemmende Getriebestufe 3, die beispielsweise ein Schneckenrad verwenden kann, einen Abtrieb 4, über den ein zu verstellendes Element, wie eine Klappe, Tür etc, bewegt werden kann und weitere Getriebestufen, die zwischen der selbsthemmenden Getriebestufe 3 und dem Abtrieb 4 liegen können.

Das Getriebe 2 umfasst eine Sicherheitskupplung 5, die dazu eingerichtet ist, die selbsthemmende Getriebestufe 3 im Fall eines zu großen äußeren, also über den Abtrieb 4 eingebrachten, Moments, vom äußeren Moment zu trennen. Die Sicherheitskupplung 5 ist zwischen zwei koaxialen Zahnrädern, nämlich zwischen einem motorseitigen Zahnrad 10 und einem abtriebsseitigen Zahnrad 11, des Getriebes eingerichtet.

Der Verstellantrieb umfasst ferner einen Winkelmesssensor 9 und eine nicht dargestellte Steuerungseinheit, wobei die Steuerungseinheit und der Winkelmesssensor 9 dazu eingerichtet sind, dass der Winkelmesssensor 9 die äußere Bewegungsanforderung 8 erfasst und daraufhin, bei einer ausreichend starken Bewegungsanforderung 8 und ausreichend großer Winkeländerung, die Steuerungseinheit den Elektromotor 1 aktiviert.

Das motorseitige Zahnrad 10 und das abtriebsseitige Zahnrad 11, zusammen mit der Sicherheitskupplung 5 und dem Freigang 6 sind in den Fig. 2 bis 4 näher dargestellt. Das motorseitige Zahnrad 10 und das abtriebsseitige Zahnrad 11 sind zumindest axial abschnittsweise als Hohlräder ausgeführt, so dass das Verbindungselement 12 radial innerhalb des motorseitigen Zahnrads 10 und des abtriebsseitigen Zahnrads 11 angeordnet sein kann.

Die Sicherheitskupplung 5 wird, wie in Fig. 2 dargestellt, gebildet aus einem motorseitigen Zahnrad 10 und einem abtriebsseitigen Zahnrad 11, sowie einem Verbindungselement 12 zur Verbindung des motorseitigen Zahnrads 10 mit dem abtriebsseitigen Zahnrad 11.

Das Verbindungselement 12 weist im geschlossenen Zustand der Sicherheitskupplung 5 eine Formschlussverbindung zu einem der beiden Zahnräder 10, 11 auf, nämlich in der dargestellten Ausführung, wie in Fig. 3 ersichtlich, zum motorseitigen Zahnrad 10.

Die Sicherheitskupplung 5 verwendet, wie in Fig. 3 gut ersichtlich, mehrere umfänglich verteilte Kupplungselemente 15, nämlich im dargestellten Fall drei Kugeln, für eine formschlüssige Verbindung zwischen motorseitigem Zahnrad 10 und abtriebsseitigem Zahnrad 11, wobei die Kupplungselemente 15 im Fall eines zu großen äußeren, also über den Abtrieb 4 eingebrachten Moments, durch das zu große äußere Moment aus der formschlüssigen Verbindung gedrückt werden, sodass die Kupplung geöffnet und die selbsthemmende Getriebestufe 3 vom äußeren Moment getrennt wird. Die Kupplungselemente 15, nämlich Kugeln, sind im Wesentlichen im Verbindungselement 12 angeordnet. Die Kupplungselemente 15, nämlich Kugeln, sind mittels bügelförmigen Federelementen 16 in die formschlüssige Verbindung hinein, also zum geschlossenen Zustand der Kupplung, vorgespannt.

In Fig. 4 ist zu sehen, dass die Sicherheitskupplung 5 einen Freigang 6 aufweist und drei komprimierbare und/oder elastische und/oder federnde Dämpfungselemente 7 im Freigang 6 angeordnet sind. Hierdurch ist die Haptik einer äußeren, also über den Abtrieb 4 eingebrachten, Bewegungsanforderung 8 durch das Dämpfungselement 7 bzw. die Dämpfungselemente 7 mitbestimmt. Die Dämpfungselemente 7 sind umfänglich um das Verbindungselement 12 in zumindest manchen Zwischenräumen des Freigangs 6 verteilt.

Das Verbindungselement 12 weist somit den Freigang 6 und die Dämpfungselemente 7 zu dem abtriebsseitigen Zahnrad 11 auf - in dem breiten Sinn dass das Verbindungselement 12 maßgeblich an diesen Funktionen teilhat.

Genauer wird der Freigang 6 dadurch gebildet, dass das Verbindungselement 12 radial außen liegende Erhebungen 13 aufweist, in dieser Ausführung sechs Stück, die in entsprechenden Ausnehmungen 14 des abtriebsseitigen Zahnrads 11 liegen. Die Ausnehmungen 14 sind breiter ausgebildet als die Erhebungen 13.

Die komprimierbaren Dämpfungselemente 7 sind in den Zwischenräumen zwischen jeweils einer Erhebung 13 und einer Ausnehmung 14 angeordnet, die durch die Breite der Ausnehmungen 14 gebildet werden. Die Dämpfungselemente 7 weisen, in axialer Richtung auf die Zahnräder gesehen, jeweils eine u-form auf und liegen u-förmig zwischen den Erhebungen 13 und den Ausnehmungen 14.

Um ein selbsthemmendes Getriebe vor Beschädigungen zu schützen ist somit eine Sicherheitskupplung 5 verbaut. Um eine Bewegungsanforderung 8 (tip to run) zu erkennen, ist zwischen der selbsthemmenden Getriebestufe 3 und dem antriebsseitigen Zahnrad 10 der Kupplung 5 ein Winkelmesssensor 9, zum Beispiel ein Potentiometer oder Halleffektsensor, vorgesehen. Um die haptischen Anforderungen der Bewegungsanforderung (tip to run) einstellbar zu machen, ist in der Kupplung 5 ein Freigang 6 mit Dämpfung, nämlich mit Dämpfungselementen 7, vorgesehen.

Der Freigang 6 ermöglicht eine Rotation des rückgetriebenen Zahnrades an der Abtriebseite 11 relativ zum Verbindungselement 12 ohne den Auskuppelmechanismus der Sicherheitskupplung 5 zu aktivieren.

Das Dämpfungselement 7 ist komprimierbar oder federnd ausgeführt und erzeugt ein, die Haptik bestimmendes, Gegenmoment bei der manuell induzierten Bewegungsanforderung 8 (tip to run) und verhindert zudem ein loses Freispiel im Abtrieb.

Übt eine Person auf das mit dem Abtriebsrad 4 verbundene Bauteil, beispielsweise eine Klappe, ein Griff, oder ähnliches, ein Moment aus, so ist dieses Bauteil entsprechend der Härte des Dämpfungselements 7 und der Größe des Freigangs 6 nachgiebig. Die dabei auftretende Rotation des Abtriebs kann über einen Winkelsensor 9 detektiert werden und als Anstoß für eine elektrische Verstellung verwendet werden.

### Bezugszeichenliste

- 1: Elektromotor
- 2: Getriebe
- 3: Selbsthemmende Getriebestufe
- 4: Abtrieb
- 5: Sicherheitskupplung
- 6: Freigang
- 7: Dämpfungselement
- 8: Bewegungsanforderung
- 9: Winkelmesssensor
- 10: motorseitiges Zahnrad
- 11: abtriebsseitiges Zahnrad
- 12: Verbindungselement
- 13: Erhebung
- 14: Ausnehmung
- 15: Kupplungselement
- 16: Federelement

## Patentansprüche

1. Verstellantrieb, umfassend einen Elektromotor (1) und ein Getriebe (2) mit einer selbsthemmenden Getriebestufe (3) und mit einem Abtrieb (4), wobei das Getriebe (2) eine Sicherheitskupplung (5) umfasst, die dazu eingerichtet ist, die selbsthemmende Getriebestufe (3) im Fall eines zu großen äußeren, also über den Abtrieb (4) eingebrachten, Moments, vom äußeren Moment zu trennen,
wobei die Sicherheitskupplung (5) einen Freigang (6) aufweist, wobei zumindest ein komprimierbares und/oder elastisches und/oder federndes Dämpfungselement (7) im Freigang (6) angeordnet ist, so dass die Haptik einer äußeren, also über den Abtrieb (4) eingebrachten, Bewegungsanforderung (8) durch das Dämpfungselement (7) mitbestimmt ist, wobei die Sicherheitskupplung (5) ein motorseitiges Zahnrad (10) und ein abtriebsseitiges Zahnrad (11) umfasst, **dadurch gekennzeichnet, dass** die Sicherheitskupplung ein Verbindungselement (12) zur Verbindung des motorseitigen Zahnrads (10) mit dem abtriebsseitigen Zahnrad (11) umfasst,
wobei das Verbindungselement (12) im geschlossenen Zustand der Sicherheitskupplung (5) eine Formschlussverbindung zu einem der beiden Zahnräder (10, 11), motorseitiges Zahnrad (10) oder abtriebsseitiges Zahnrad (11), aufweist und wobei das Verbindungselement (12) den Freigang (6) und das Dämpfungselement (7) zu dem anderen der beiden Zahnräder (11, 10), abtriebsseitiges Zahnrad (11) oder motorseitiges Zahnrad (10), aufweist.

2. Verstellantrieb nach Anspruch 1,
**dadurch gekennzeichnet, dass** der Verstellantrieb einen Winkelmesssensor (9) und eine Steuerungseinheit umfasst, wobei die Steuerungseinheit und der Winkelmesssensor (9) dazu eingerichtet sind, dass der Winkelmesssensor (9) die äußere Bewegungsanforderung (8) erfasst und daraufhin die Steuerungseinheit den Elektromotor (1) aktiviert.

3. Verstellantrieb nach zumindest einem der vorhergehenden Ansprüche,
**dadurch gekennzeichnet, dass** das motorseitige Zahnrad (10) und das abtriebsseitige Zahnrad (11) zumindest axial abschnittsweise als Hohlräder ausgeführt sind und dass das Verbindungselement (12) radial innerhalb des motorseitigen Zahnrads (10) und des abtriebsseitigen Zahnrads (11) angeordnet ist.

4. Verstellantrieb nach Anspruch 3,
**dadurch gekennzeichnet, dass** der Freigang (6) dadurch gebildet wird, dass das Verbindungselement (12) radial außen liegende Erhebungen (13) aufweist, die in entsprechenden Ausnehmungen (14) des motorseitigen Zahnrads (10) oder des abtriebsseitigen Zahnrads (11) liegen, wobei die Ausnehmungen (14) breiter ausgebildet sind als die Erhebungen (13), und/oder umgekehrt, so dass das Verbindungselement (12) radial außen liegende Ausnehmungen (14) aufweist, die um entsprechenden Erhebungen (13) des motorseitigen Zahnrads (10) oder des abtriebsseitigen Zahnrads (11) liegen, wobei die Ausnehmungen (14) breiter ausgebildet sind als die Erhebungen (13).

5. Verstellantrieb nach Anspruch 4,
**dadurch gekennzeichnet, dass** das zumindest eine komprimierbare und/oder elastische und/oder federnde Dämpfungselement (7) im Zwischenraum zwischen einer Erhebung (13) und einer Ausnehmung (14) angeordnet ist, bevorzugt mehrere komprimierbare und/oder elastische und/oder federnde Dämpfungselemente (7) jeweils in den Zwischenräumen zwischen einer Erhebung (13) und einer Ausnehmung (14) angeordnet sind, vorzugsweise u-förmig um die Erhebungen (13) und/oder in den Ausnehmungen (14) liegend.

6. Verstellantrieb nach zumindest einem der vorhergehenden Ansprüche,
**dadurch gekennzeichnet, dass** die Sicherheitskupplung (5) Kupplungselemente (15), insbesondere Kugeln, für eine formschlüssige Verbindung zwischen motorseitigem Zahnrad (10) und abtriebsseitigem Zahnrad (11) verwendet, wobei die Kupplungselemente (15) im Fall eines zu großen äußeren, also über den Abtrieb (4) eingebrachten, Moments, durch das zu große äußere Moment aus der formschlüssigen Verbindung gedrückt werden, sodass die selbsthemmende Getriebestufe (3) vom äußeren Moment getrennt wird.

7. Verstellantrieb nach Anspruch 6,
**dadurch gekennzeichnet, dass** die Kupplungselemente (15), insbesondere Kugeln, mittels Federelementen (16) in die formschlüssige Verbindung hinein vorgespannt sind.

8. Verstellantrieb nach zumindest einem der Ansprüche 1 bis 5 und zumindest einem der Ansprüche 6 bis 7,
**dadurch gekennzeichnet, dass** die Kupplungselemente (15), insbesondere Kugeln, im Wesentlichen im Verbindungselement (12) angeordnet sind.

## Claims

1. Adjusting drive comprising an electric motor (1) and a transmission (2) having a self-locking transmission stage (3) and having an output (4), wherein the transmission (2) comprises a safety clutch (5), which is configured, in the event of an excessive external torque, i.e. a torque introduced via the output (4), to separate the self-locking transmission stage (3) from the external torque,
wherein the safety clutch (5) has a free travel (6), wherein at least one compressible and/or elastic and/or resilient damping element (7) is arranged in the free travel (6), with the result that the haptics of an external movement demand (8), i.e. a movement demand introduced via the output (4), are co-determined by the damping element (7) wherein the safety clutch (5) has a motor-side gearwheel (10) and an output-side gearwheel (11), **characterized in that** the safety clutch comprises a connection element (12) for connecting the motor-side gearwheel (10) to the output-side gearwheel (11), wherein the connection element (12) has a positive-locking connection to one of the two gearwheels (10, 11), the motor-side gearwheel (10) or the output-side gearwheel (11), in the closed state of the safety clutch (5), and wherein the connection element (12) has the free travel (6) and the damping element (7) for the other of the two gearwheels (11, 10), the output-side gearwheel (11) or the motor-side gearwheel (10).

2. Adjusting drive according to Claim 1,
**characterized in that** the adjusting drive comprises an angle measuring sensor (9) and a control unit, wherein the control unit and the angle measuring sensor (9) are configured to ensure that the angle measuring sensor (9) detects the external movement demand (8), and the control unit then activates the electric motor (1).

3. Adjusting drive according to at least one of the preceding claims, **characterized in that** the motor-side gearwheel (10) and the output-side gearwheel (11) are embodied at least in some axial section or sections as ring gears, and **in that** the connection element (12) is arranged radially inside the motor-side gearwheel (10) and the output-side gearwheel (11).

4. Adjusting drive according to Claim 3,
**characterized in that** the free travel (6) is formed by the fact that the connection element (12) has radially outer raised portions (13), which lie in corresponding recesses (14) in the motor-side gearwheel (10) or in the output-side gearwheel (11), wherein the recesses (14) are designed to be wider than the raised portions (13), and/or vice versa, such that the connection element (12) has radially outer recesses (14), which surround corresponding raised portions (13) on the motor-side gearwheel (10) or on the output-side gearwheel (11), wherein the recesses (14) are designed to be wider than the raised portions (13).

5. Adjusting drive according to Claim 4,
**characterized in that** the at least one compressible and/or elastic and/or resilient damping element (7) is arranged in the interspace between a raised portion (13) and a recess (14), preferably a plurality of compressible and/or elastic and/or resilient damping elements (7) each being arranged in the interspaces between a raised portion (13) and a recess (14), preferably lying in a U shape around the raised portions (13) and/or in the recesses (14).

6. Adjusting drive according to at least one of the preceding claims, **characterized in that** the safety clutch (5) uses clutch elements (15), in particular balls, for a positive-locking connection between the motor-side gearwheel (10) and the output-side gearwheel (11), wherein, in the event of an excessive external torque, i.e. a torque introduced via the output (4), the clutch elements (15) are forced out of the positive-locking connection by the excessive torque, thus separating the self-locking transmission stage (3) from the external torque.

7. Adjusting drive according to Claim 6,
**characterized in that** the clutch elements (15), in particular balls, are preloaded into the positive-locking connection by means of spring elements (16).

8. Adjusting drive according to at least one of Claims 1 to 5 and at least one of Claims 6 or 7,
**characterized in that** the clutch elements (15), in particular balls, are arranged substantially in the connection element (12).

## Revendications

1. Entraînement de réglage, comprenant un moteur électrique (1) et une transmission (2) avec un étage de transmission autobloquant (3) et avec une sortie (4), la transmission (2) comprenant un embrayage de sécurité (5) qui est mis au point pour séparer l'étage de transmission autobloquant (3) en cas de couple extérieur important, donc introduit par la sortie (4), du couple extérieur,
l'embrayage de sécurité (5) comportant un jeu (6), au moins un élément d'amortissement (7) compressible et/ou élastique et/ou sur ressort étant disposé dans le jeu (6), de telle sorte que l'haptique d'une exigence de mouvement extérieure (8), donc introduite par la sortie (4), est également codéterminée par l'élément d'amortissement (7), l'embrayage de sécurité (5) comprenant une roue dentée côté moteur (10) et une roue dentée côté sortie (11), **caractérisé en ce que** l'embrayage de sécurité comprend un élément de liaison (12) pour relier la roue dentée côté moteur (10) à la roue dentée côté sortie (11), l'élément de liaison (12) comportant, dans l'état fermé de l'embrayage de sécurité (5), une liaison à complémentarité de forme avec l'une des deux roues dentées (10, 11), la roue dentée côté moteur (10) ou la roue dentée côté sortie (11), et l'élément de liaison (12) comportant le jeu (6) et l'élément d'amortissement (7) avec l'autre des deux roues dentées (11, 10), la roue dentée côté sortie (11) ou la roue dentée côté moteur (10).

2. Entraînement de réglage selon la revendication 1,
**caractérisé en ce que** l'entraînement de réglage comprend un capteur de mesure d'angle (9) et une unité de commande, l'unité de commande et le capteur de mesure d'angle (9) étant mis au point pour que le capteur de mesure d'angle (9) détecte l'exigence de mouvement extérieure (8) puis que l'unité de commande active le moteur électrique (1).

3. Entraînement de réglage selon au moins l'une des revendications précédentes,
**caractérisé en ce que** la roue dentée côté moteur (10) et la roue dentée côté sortie (11) sont réalisées au moins par endroits axialement comme des couronnes, et que l'élément de liaison (12) est disposé radialement à l'intérieur de la roue dentée côté moteur (10) et de la roue dentée côté sortie (11).

4. Entraînement de réglage selon la revendication 3,
**caractérisé en ce que** le jeu (6) est formé **en ce que** l'élément de liaison (12) comporte des parties surélevées (13) situées radialement à l'extérieur, qui se trouvent dans des évidements (14) correspondants de la roue dentée côté moteur (10) ou de la roue dentée côté sortie (11), les évidements (14) étant plus larges que les parties surélevées (13) et/ou inversement, de telle sorte que l'élément de liaison (12) comporte des évidements situés radialement à l'extérieur (14), qui se situent autour de parties surélevées (13) correspondantes de la roue dentée côté moteur (10) ou de la roue dentée côté sortie (11), les évidements (14) étant plus larges que les parties surélevées (13).

5. Entraînement de réglage selon la revendication 4,
**caractérisé en ce que** l'au moins un élément d'amortissement (7) compressible et/ou élastique et/ou sur ressort est disposé dans l'espace intermédiaire entre une partie surélevée (13) et un évidement (14), de manière préférée plusieurs éléments d'amortissement (7) compressibles et/ou élastiques et/ou sur ressort sont disposés chacun dans les espaces intermédiaires entre une partie surélevée (13) et un évidement (14), tout en étant situés de préférence en U autour des parties surélevées (13) et/ou dans les évidements (14).

6. Entraînement de réglage selon au moins l'une des revendications précédentes, **caractérisé en ce que** l'embrayage de sécurité (5) utilise des éléments d'embrayage (15), en particulier des billes, pour une liaison à complémentarité de forme entre la roue dentée côté moteur (10) et la roue dentée côté sortie (11), les éléments d'embrayage (15) étant poussés hors de la liaison à complémentarité de forme par le couple extérieur trop important dans le cas d'un couple extérieur trop important, donc introduit par la sortie (4) si bien que l'étage de transmission autobloquant (3) est séparé du couple extérieur.

7. Entraînement de réglage selon la revendication 6,
**caractérisé en ce que** les éléments d'embrayage (15), en particulier les billes, sont précontraints dans la liaison à complémentarité de forme au moyen d'éléments de ressort (16).

8. Entraînement de réglage selon au moins l'une des revendications 1 à 5 et au moins l'une des revendications 6 à 7,
**caractérisé en ce que** les éléments d'embrayage (15), en particulier les billes, sont disposés sensiblement dans l'élément de liaison (12).
